# EUROPÄISCHE PATENTSCHRIFT

(11) **EP 2 777 121 B1**
(45) Veröffentlichungstag und Bekanntmachung des Hinweises auf die Patenterteilung: **01.08.2018**
(21) Anmeldenummer: 12781073.7
(22) Anmeldetag: 29.10.2012
(51) Int. Cl.: H02J 3/32, G05F 1/66

(54) **VERFAHREN ZUR BEREITSTELLUNG VON REGELLEISTUNG MIT EINEM ENERGIESPEICHER UNTER AUSNUTZUNG VON TOLERANZEN BEIM ZEITPUNKT DER REGELLEISTUNGSERBRINGUNG**
METHOD FOR PROVIDING CONTROL POWER WITH AN ENERGY STORE USING TOLERANCES AT THE TIME OF PROVIDING THE CONTROL POWER
PROCEDE POUR FOURNIR UNE PUISSANCE DE RÉGULATION AU MOYEN D'UN ACCUMULATEUR D'ÉNERGIE EN METTANT A PROFIT DES TOLERANCES AU MOMENT DE LA FOURNITURE DE LA PUISSANCE DE RÉGULATION

(30) Priorität: 10.11.2011 DE 102011055228
(43) Veröffentlichungstag der Anmeldung: 17.09.2014
(73) Patentinhaber: Evonik Degussa GmbH, 45128 Essen (DE); Steag Power Saar GmbH, 66111 Saarbrücken (DE)
(72) Erfinder: MARKOWZ, Georg, 63755 Alzenau (DE); SCHWEISSTHAL, Wolfgang, 66399 Mandelbachtal (DE); KOLLIGS, Carsten, 46244 Bottrop (DE); BREZSKI, Holger, 35463 Fernwald (DE); DEIS, Wolfgang, 69115 Heidelberg (DE); IGEL, Michael, 66123 Saarbrücken (DE); FLEMMING, Anna, 60598 Ftrankfurt (DE); GAMRAD, Dennis, 46562 Voerde (DE); COCHET, Sébastien, 40885 Ratingen (DE); WINTERNHEIMER, Stefan, 66113 Saarbrücken (DE)
(86) Internationale Anmeldenummer: PCT/EP2012/071338
(87) Internationale Veröffentlichungsnummer: WO 2013/068254

(56) Entgegenhaltungen:
- WO-A1-2007/104167
- DE-A1-102009 050 042
- GB-A- 2 426 878
- US-A1- 2010 327 800
- US-A1- 2011 245 987

## Beschreibung

Die Erfindung betrifft ein Verfahren zur Bereitstellung von Regelleistung für ein Stromnetz, bei dem zumindest ein an das Stromnetz angeschlossener Energiespeicher dem Stromnetz nach Bedarf Energie zuführt und/oder aus dem Stromnetz nach Bedarf Energie aufnimmt; sowie eine Vorrichtung zum Durchführen eines solchen Verfahrens.

Stromnetze werden verwendet, um Strom von meist mehreren Energieerzeugern in großen Gebieten auf viele Nutzer zu verteilen und Haushalte und Industrie mit Energie zu versorgen. Energieerzeuger meist in Form von Kraftwerken stellen dazu die benötigte Energie bereit. In der Regel wird die Stromerzeugung auf den prognostizierten Verbrauch hin geplant und bereitgestellt.

Sowohl beim Erzeugen als auch dem Verbrauchen von Energie kann es jedoch zu ungeplanten Schwankungen kommen. Diese können auf der Energieerzeugerseite beispielsweise dadurch entstehen, dass ein Kraftwerk oder ein Teil des Stromnetzes ausfällt oder zum Beispiel im Fall erneuerbarer Energien wie Wind, dass die Energieerzeugung höher ausfällt als prognostiziert. Auch bezüglich der Verbraucher kann es zu unerwartet hohen oder niedrigen Verbräuchen kommen. Der Ausfall eines Teils des Stromnetzes beispielsweise, der einige Verbraucher von der Energieversorgung abschneidet, kann zu einer plötzlichen Reduzierung des Stromverbrauchs führen.

Dies führt im Allgemeinen dazu, dass es in Stromnetzen durch ungeplante und/oder kurzfristige Abweichungen von Leistungserzeugung und/oder -verbrauch zu Schwankungen der Netzfrequenz kommt. Die gewünschte Wechselstromfrequenz beträgt beispielsweise in Europa 50,000 Hz. Diese Frequenz wird häufig auch als Sollfrequenz bezeichnet. Eine Verringerung des Verbrauchs gegenüber dem Plan führt zu einer Erhöhung der Frequenz bei planmäßig erzeugter Leistung durch die Energieerzeuger, gleiches gilt für eine Erhöhung der Stromproduktion gegenüber dem Plan bei planmäßigem Verbrauch. Eine Verringerung der Leistung der Energieerzeuger führt dagegen zu einer Verringerung der Netzfrequenz bei planmäßigem Verbrauch, gleiches gilt für eine Erhöhung des Verbrauchs gegenüber dem Plan bei plangemäßer Erzeugung.

Aus Gründen der Netzstabilität ist es erforderlich, diese Abweichungen in einem definierten Rahmen zu halten. Dazu muss je nach Höhe und Richtung der Abweichung gezielt positive Regelleistung durch Zuschalten von zusätzlichen Erzeugern oder Abschalten von Verbrauchern oder negative Regelleistung durch Abschalten von Erzeugern oder Hinzuschalten von Verbrauchern bereitgestellt werden. Es besteht allgemein der Bedarf an einer wirtschaftlichen und effizienten Bereitstellung dieser Regelleistungen, wobei die Anforderungen an die bereitzuhaltenden Kapazitäten und die Dynamik der Regelleistungsquellen beziehungsweise -senken je nach Charakteristik des Stromnetzes variieren können.

In Europa gibt es beispielsweise ein Regelwerk (UCTE Handbook), das drei verschiedene Kategorien an Regelleistung beschreibt. Darin sind auch die jeweiligen Anforderungen an die Regelleistungsarten festgelegt. Die Regelleistungsarten unterscheiden sich unter anderem in den Anforderungen an die Dynamik und die Dauer der Leistungserbringung. Außerdem werden sie unterschiedlich hinsichtlich der Randbedingungen eingesetzt. Primärregelleistung (PRL) ist unabhängig vom Ort der Verursachung der Störung europaweit von allen eingebundenen Quellen zu erbringen und zwar im Wesentlichen proportional zur aktuellen Frequenzabweichung. Die absolut maximale Leistung ist bei Frequenzabweichungen von minus 200 mHz und (absolut) darunter zu erbringen, die absolut minimale Leistung ist bei Frequenzabweichungen von plus 200 mHz und darüber zu erbringen. Hinsichtlich der Dynamik gilt, dass aus dem Ruhezustand die jeweils (betragsmäßig) maximale Leistung innerhalb von 30 Sekunden bereitgestellt werden muss. Demgegenüber sind Sekundärregelleistung (SRL) und Minutenreserveleistung (MR) in den Bilanzräumen zu erbringen, in denen die Störung aufgetreten ist. Ihre Aufgabe ist es, die Störung möglichst schnell zu kompensieren und somit dafür zu sorgen, dass die Netzfrequenz wieder möglichst schnell, vorzugsweise spätestens nach 15 Minuten wieder im Sollbereich liegt. Hinsichtlich der Dynamik werden an die SRL und die MRL geringere Anforderungen gestellt (5 beziehungsweise 15 Minuten bis zur vollen Leistungserbringung nach Aktivierung), gleichzeitig sind diese Leistungen auch über längere Zeiträume bereitzustellen als Primärregelleistung.

In den bisher betriebenen Stromnetzen wird ein Großteil der Regelleistung von konventionellen Kraftwerken, insbesondere Kohle- und Atomkraftwerken bereitgestellt. Zwei grundsätzliche Problemstellungen resultieren hieraus. Zum einen werden die konventionellen, Regelleistung bereitstellenden Kraftwerke nicht bei Volllast und damit maximalen Wirkungsgraden, sondern leicht unterhalb derselben betrieben, um bei Bedarf positive Regelleistung bereitstellen zu können, gegebenenfalls über einen theoretisch unbegrenzten Zeitraum. Zum anderen sind mit zunehmendem Ausbau und zunehmender bevorzugter Nutzung der erneuerbaren Energien immer weniger konventionelle Kraftwerke in Betrieb, was aber oftmals die Grundvoraussetzung für die Erbringung von Regelleistungen ist.

Aus diesem Grund wurden Ansätze entwickelt, vermehrt Energiespeicher einzusetzen, um negative Regelleistung zu speichern und bei Bedarf als positive Regelleistung bereitzustellen.

Der Einsatz von Hydro-Pumpspeicherwerken zur Erbringung von Regelleistung ist Stand der Technik. In Europa werden die verschiedenen Regelleistungsarten von Pumpspeichern erbracht. Hydropumpspeicher werden jedoch auch immer wieder genannt als gegenwärtig wirtschaftlichste Technologie zur Ein- und Ausspeicherung von erneuerbaren Energien, um Energieangebot und -bedarf zeitlich besser aufeinander anpassen zu können. Das Potenzial zum Ausbau der Speicherkapazitäten - insbesondere in Norwegen - wird kontrovers diskutiert, da für die Nutzung beträchtliche Kapazitäten in Stromleitungen genehmigt und installiert werden müssen. Folglich steht die Nutzung für das energiewirtschaftliche Lastmanagement in Konkurrenz zur Bereitstellung von Regelleistung.

Vor diesem Hintergrund wurden im Bereich der Primärregelleistung in der jüngeren Vergangenheit immer wieder Ansätze untersucht und beschrieben, auch andere Speichertechnologien wie beispielsweise Schwungmassen- und Batteriespeicher für die Bereitstellung von Regelleistung einzusetzen.

Aus der US 2006/122738 A1 ist ein Energiemanagementsystem bekannt, dass einen Energieerzeuger und einen Energiespeicher umfasst, wobei der Energiespeicher durch den Energieerzeuger aufladbar ist. Dadurch soll ein Energieerzeuger, der im normalen Betrieb keine gleichmäßige Energieerzeugung gewährleistet, wie zum Beispiel die zunehmend favorisierten erneuerbaren Energien, wie Windkraft- oder Photovoltaikkraftwerke, in die Lage versetzt werden, ihre Energie gleichmäßiger ins Stromnetz abzugeben. Nachteilig ist hieran, dass hierdurch zwar ein einzelnes Kraftwerk stabilisiert werden kann, alle anderen Störungen und Schwankungen des Stromnetzes aber nicht oder nur sehr begrenzt abgefangen werden können.

Es ist aus der WO 2010042 190 A2 und der JP 2008 178 215 A bekannt, Energiespeicher zur Bereitstellung von positiver und negativer Regelleistung zu verwenden. Wenn die Netzfrequenz einen Bereich um die gewünschte Netzfrequenz verlässt, wird entweder Energie aus dem Energiespeicher bereitgestellt oder in den Energiespeicher aufgenommen, um die Netzfrequenz zu regulieren. Auch die DE 10 2008 046 747 A1 schlägt vor, einen Energiespeicher in einem Inselstromnetz derart zu betreiben, dass der Energiespeicher zur Kompensation von Verbrauchsspitzen und Verbrauchsminima eingesetzt wird. Nachteilig ist hieran, dass die Energiespeicher nicht die notwendige Kapazität haben, um eine längere Störung oder mehrere, hinsichtlich der Frequenzabweichung gleichgerichtete Störungen hintereinander zu kompensieren.
Aus WO 2007 104 167 A1 ist bekannt, den Ladezustand des Speichers bei dem Maß in dem Regelleistung erbracht wird zu berücksichtigen, um den Speicher länger innerhalb seiner zulässigen Ladezustandsgrenzen zu halten.
US 2011 0245 987 A1 offenbart, dass ein Elektrofahrzeug sich an der Netzstützung beteiligen kann und trotzdem geladen wird, wenn die Frequenztoleranz Vorschriften der Regelleistungserbringung genutzt werden. In dem Artikel "Optimizing a Battery Energy Storage System for Primary Frequency Control" von Oudalov et al., in IEEE Transactions on Power Systems, Vol. 22, No. 3, August 2007, wird die Kapazität eines Akkumulators in Abhängigkeit von technischen und betrieblichen Randbedingungen bestimmt, damit dieser nach den europäischen Normen (UCTE Handbook) Primärregelleistung bereitstellen kann. Es zeigt sich, dass auf Grund der Ein- und Ausspeicherverluste langfristig immer wieder ein Aufladen des Energiespeichers in größeren Zeitabständen unvermeidbar ist. Trotzdem kann es kurzfristig beziehungsweise vorübergehend dazu kommen, dass der Energiespeicher überladen wird. In dem Artikel wird ein (begrenzter Einsatz) von Widerständen vorgeschlagen. Dies führt jedoch zu einer Energievernichtung und in der Regel einer Entwertung der Energie. Trotz dieser Maßnahme ist der Energiespeicher mit einer Volllast-Laufzeit von 1,6 Stunden immer noch vergleichsweise groß dimensioniert, jedenfalls deutlich größer als es den Minimalanforderungen des UCTE Handbooks entspricht. Die vergleichsweise hohen Kapazitäten sind mit entsprechenden Investitionskosten verbunden und machen den Einsatz von Speichern oftmals unwirtschaftlich.

Der Preis für die Bereitstellung von Regelleistung richtet sich maßgeblich danach, wie schnell die Regelleistung nach einer Anfrage, das heißt, nach einer

Frequenzabweichung außerhalb der Toleranz, bereitgestellt werden kann. Bei PRL und SRL wird schon die Bereithaltung der Energie vergütet. Bei SRL und MR wird auch die Arbeitsleistung vergütet.

Im Bereich der Sekundärregelleistungsbereitstellung werden im Folgenden für das Beispiel des europäischen Verbundnetzes der UCTE die verschiedenen Anforderungen an die Dynamik der Leistungserbringung (In- und Außerbetriebnahme) der Quellen (beziehungsweise der Pools aus Quellen) erläutert.
1. Die präqualifizierbare Sekundärregelleistung (kurz SR-Leistung, SRL oder auch Nennleistung) ergibt sich aus der innerhalb von 5 Minuten aktivierten und gemessenen Leistungsänderung (jeder Regelrichtung)
2. Ein kurzzeitiges Überschwingen von maximal 10% über den Sekundärregelleistungssollwert ist zulässig. In jedem Fall ist ein kurzzeitiges Überschwingen von bis zu 5 MW zulässig.
3. Im Fall von Sekundärregelleistungs-Pools muss nach spätestens 30 Sekunden eine Reaktion des Pools für den Übertragungsnetzbetreiber messbar sein.

Die Vergütungen für die Sekundärregelleistungs-Bereitstellung setzen sich zusammen aus einem Leistungsentgelt für die Vorhaltung der Sekundärregelleistung und einem Arbeitsentgelt für die tatsächlich erbrachte Energie im Rahmen der Sekundärregelleistungs-Bereitstellung.

Solche Vorgaben insbesondere zu Gruppen von Energieerzeugern sind aus dem Forum Netztechnik/Netzbetrieb im VDE (FNN) "TransmissionCode 2007" vom November 2009 ersichtlich. Hierzu ist insbesondere der Anhang D2 für die Anforderungen von SRL-Pools relevant, in dem auch beschrieben ist, nach welchen Verfahren eine Leittechnik bei einem Anbieter von SRL betrieben werden kann.

Bei der Verwendung von Kraftwerken oder Verbrauchern, wie Elektrolyse-Werken zur Bereitstellung von Regelleistung ergibt sich das Problem, dass diese nicht schnell genug hochgefahren werden können, um im Ernstfall in der erforderlichen Geschwindigkeit für MR oder für SRL bereitzustellen.

Akkumulatoren und andere Energiespeicher können sehr schnell Energie aufnehmen oder abgeben, wodurch sie sich grundsätzlich zur Bereitstellung von PRL eignen. Nachteilig ist jedoch hieran, dass sehr große Kapazitäten der Akkumulatoren bereitgestellt werden müssen, um die Leistung auch über einen längeren Zeitraum oder wiederholt liefern zu können. Akkumulatoren mit sehr großer Kapazität sind aber auch sehr teuer.

Auf Grund der Verluste beim Ein- und Ausspeichern von Energie erfolgt bei statistisch symmetrischer Abweichung der Netzfrequenzen vom Sollwert durch den Betrieb früher oder später eine Entleerung des Energiespeichers, wie zum Beispiel eines Akkumulators. Es ist daher erforderlich, den Energiespeicher mehr oder weniger regelmäßig gezielt aufzuladen. Eventuell muss dieser Ladestrom separat bezahlt werden.

Aus der US 7,839,027 B2 ist ein gattungsgemäßes Verfahren zur Bereitstellung von Regelleistung mit einem Energiespeicher bekannt. Dabei wird in den Zeiten, in denen keine Regelleistung benötigt wird, der Energiespeicher geladen oder entladen, um einen gewünschten Ausgangsladungszustand zu erzielen. Nachteilig ist hieran, dass die Leistung aus dem Netz bezogen werden muss, also bezahlt werden muss. Ferner ist Nachteilig, dass, wenn viele Regelzyklen aufeinander folgen, der Energiespeicher noch immer stark geladen oder entladen wird. Es muss also immer noch eine große Kapazität (Energiespeicherkapazität) des Energiespeichers vorgehalten werden.

Eine konsequente Einhaltung der Leitlinien zur Präqualifizierung von Primärregeltechnologien erfordert die Bereithaltung entsprechender Leistungsreserven zu jedem beliebigen Betriebszeitpunkt und damit Ladungszustand des Energiespeichers. Diese Anforderung (in Deutschland aktuell: die vermarktete Primärregelleistung über eine Dauer von 15 min) führt dazu, dass eine entsprechende, Investitionskosten erhöhende Kapazität vorgehalten werden muss. Tatsächlich würde eine solche Reserve (statistisch bedingt) nur sehr selten genutzt werden.

Es wurde im Rahmen der Erfindung gefunden, dass mitunter beträchtliche Energiemengen monoton ein- oder ausgespeist werden, wie eine Analyse von realen Frequenzverläufen der Erfinder zeigt. Dies führt bei gegebener Speicherkapazität zu entsprechend hoher Ladezustandsänderung. Große Ladezustandsänderungen wiederum führen tendenziell zu schnellerer Alterung als geringe Ladezustandsänderungen. Entweder erreicht der Energiespeicher somit eher sein Lebensende und muss eher ausgetauscht werden, oder die Kapazität ist à priori zu erhöhen, um die relative Ladezustandsänderung zu reduzieren. Beides führt zu einer Erhöhung der Investitionskosten.

Die Aufgabe der Erfindung besteht also darin, die Nachteile des Stands der Technik zu überwinden. In Anbetracht des Stands der Technik ist es nun insbesondere Aufgabe der vorliegenden Erfindung, ein technisch verbessertes Verfahren zur Bereitstellung von Regelleistung für ein Stromnetz, bei dem zumindest ein an das Stromnetz angeschlossener Energiespeicher dem Stromnetz nach Bedarf Energie zuführt und/oder aus dem Stromnetz nach Bedarf Energie aufnimmt, zur Verfügung zu stellen, das nicht mit den Nachteilen herkömmlicher Verfahren behaftet ist. Ferner soll eine Möglichkeit gefunden werden, die Wirtschaftlichkeit des Betriebs von Energiespeichern, wie Akkumulatoren, zur Primärregelleistungsbereitstellung durch Vermeidung von ineffizienten Ladezuständen zu verbessern. Dabei soll möglichst die Bereitstellung der Primärregelleistung mit geringerer Energiespeicher-Kapazität ermöglicht werden. Zudem wäre es auch vorteilhaft, wenn eine geringere Alterungsbelastung erreicht werden könnte. Ferner wäre auch die Bereitstellung der Primärregelleistung unter Vermeidung eines zwischenzeitlichen Ladens wünschenswert. Auch soll Regelleistung bei effizienter Energieausbeute des Regelleistungslieferanten bereitgestellt werden.

Eine weitere Aufgabe der Erfindung ist darin zu sehen, dass insbesondere bei einer Verwendung von galvanischen Elementen, wie Akkumulatoren, die Kapazität des Energiespeichers möglichst gering sein soll, um die erforderliche Regelleistung bereitzustellen.

Weiterhin sollte das Verfahren möglichst einfach und kostengünstig durchgeführt werden können.

Darüber hinaus sollte das Verfahren mit möglichst wenigen Verfahrensschritten durchgeführt werden können, wobei dieselben einfach und reproduzierbar sein sollten.

Weitere nicht explizit genannte Aufgaben ergeben sich aus dem Gesamtzusammenhang der nach folgenden Beschreibung, Beispiele und Ansprüche.

Gelöst werden diese sowie weitere nicht explizit genannte Aufgaben, die jedoch aus den hierin einleitend diskutierten Zusammenhängen ohne weiteres ableitbar oder erschließbar sind, durch ein Verfahren mit allen Merkmalen des Patentanspruchs 1. Zweckmäßige Abwandlungen des erfindungsgemäßen Verfahren zur Bereitstellung von Regelleistung für ein Stromnetz, bei dem zumindest ein an das Stromnetz angeschlossener Energiespeicher dem Stromnetz nach Bedarf Energie zuführt und/oder aus dem Stromnetz nach Bedarf Energie aufnimmt, werden in den Unteransprüchen 2 bis 16 unter Schutz gestellt. Ferner hat Patentanspruch 17 eine Vorrichtung zum Durchführen eines solchen Verfahrens zum Gegenstand, während zweckmäßige Abwandlungen dieser Vorrichtung in den Unteransprüchen 18 bis 20 unter Schutz gestellt werden.

Die vorliegende Erfindung wird dementsprechend durch ein Verfahren zur Bereitstellung von Regelleistung für ein Stromnetz realisiert, bei dem zumindest ein an das Stromnetz angeschlossener Energiespeicher dem Stromnetz nach Bedarf Energie zuführt und/oder aus dem Stromnetz nach Bedarf Energie aufnimmt, das dadurch gekennzeichnet ist, dass bei einer Änderung der benötigten Regelleistung der Zeitpunkt nach der Änderung, ab dem vom Energiespeicher eine veränderte Regelleistung bereitgestellt wird, in Abhängigkeit vom aktuellen Ladezustand des Energiespeichers gewählt wird.

Durch das erfindungsgemäße Verfahren können des Weiteren unter anderem die folgenden Vorteile erzielt werden:
Hierdurch gelingt es auf nicht vorhersehbare Weise ein Verfahren zur Bereitstellung von Regelleistung für ein Stromnetz zu realisieren, bei dem zumindest ein an das Stromnetz angeschlossener Energiespeicher dem Stromnetz nach Bedarf Energie zuführt und/oder aus dem Stromnetz nach Bedarf Energie aufnimmt, das nicht mit den Nachteilen herkömmlicher Verfahren behaftet ist.

Ferner wird die Wirtschaftlichkeit des Betriebs von Energiespeichern, wie Akkumulatoren, zur Primärregelleistungsbereitstellung durch Vermeidung von ineffizienten Ladezuständen durch das erfindungsgemäße Verfahren verbessert, wobei insbesondere eine Bereitstellung von Primärregelleistung mit geringerer Energiespeicher-Kapazität ermöglicht wird.

Außerdem wird durch das erfindungsgemäße Verfahren eine geringere Alterungsbelastung erreicht, sowie ein zwischenzeitliches Laden für die Bereitstellung der Primärregelleistung vermieden.

Ferner wird die benötigte Regelleistung bei effizienter Energieausbeute des Regelleistungslieferanten bereitgestellt.

Als Energiespeicher kommen insbesondere Systeme mit stark eingeschränkter Speichergröße in Frage. Im englischsprachigen Raum werden diese u. a. als Limited Energy Storage Resources (LESRs) bezeichnet.

Insbesondere bei einer Verwendung von galvanischen Elementen, wie Akkumulatoren, kann, aufgrund der Möglichkeit die Regelleistung des Energiespeichers schnell zu ändern, die Kapazität des Energiespeichers gering gehalten werden, um die erforderliche Regelleistung bereitzustellen.

Darüber hinaus kann das erfindungsgemäße Verfahren sehr einfach und kostengünstig durchgeführt werden.

Ferner kann das Verfahren mit relativ wenigen Verfahrensschritten durchgeführt werden, wobei dieselben einfach und reproduzierbar sind.

Es kann erfindungsgemäß vorgesehen sein, dass der Zeitpunkt in einem Zeitintervall zwischen der Änderung der benötigten Regelleistung und einer maximalen Zeit nach der Änderung liegt, wobei vorzugsweise das Zeitintervall von der Art der nachgefragten Regelleistung abhängt, wobei insbesondere das Zeitintervall im Falle einer Bereitstellung von Primärregelleistung 30 Sekunden, im Falle einer Bereitstellung von Sekundärregelleistung 5 Minuten und im Falle einer Bereitstellung von Minutenreserve 15 Minuten beträgt.

Hierdurch kann in Abhängigkeit der nachgefragten Regelleistungsart die Verwendung eines Energiespeichers weiter optimiert werden, um bei ausreichender Kapazität des Energiespeichers, die von den Netzbetreibern angeforderte Regelleistung möglichst zeitnah, vorzugsweise vor dem Ablauf des maximal zulässigen Zeitintervalls, also innerhalb einer erlaubten zeitlichen Toleranz zum Erreichen von Sollwerten der Regelleistung, zu erfüllen.

Es kann ferner vorgesehen sein, dass durch die Wahl des Zeitpunkts der Ladezustand des Energiespeichers angepasst wird, insbesondere ein gewünschter mittlerer Energiegehalt im Energiespeicher angestrebt wird, wobei der gewünschte mittlere Energiegehalt im Bereich zwischen 20 % und 80 % des maximalen Energiegehalts im Energiespeichers liegt, vorzugsweise zwischen 40 % und 60 %, besonders bevorzugt bei 50 % des maximalen Energiegehalts im Energiespeichers liegt.

Durch dieses Anstreben eines mittleren gewünschten Ladezustands beziehungsweise des mittleren gewünschten Energiegehalts des Energiespeichers kann die Verwendung eines solchen Energiespeichers in überraschender vorteilhafter Weise für die Bereitstellung von Regelleistung für ein Stromnetz genutzt werden, ohne dass beispielsweise Energiespeicher mit größeren Kapazitäten notwendig werden. Hierdurch können die Nachteile klassischer Energieerzeuger und Energieverbraucher, die für die Bereitstellung von Regelleistung zumeist in Teillast gefahren werden müssen, vermieden werden. Das große Trägheitsmoment solcher Kraftwerke in Bezug auf das Hoch- und Runterfahren der Betriebsleistung generiert enorme zusätzliche Kosten und ist insofern nachteilig. Der Ladezustand entspricht im Fall von Akkumulatoren als Energiespeicher dem Ladungszustand (engl.: "State-of-Charge", SOC) oder dem Energiegehalt (engl.: State-of-Energie, SoE).

In einer bevorzugten Ausführungsform des erfindungsgemäßen Verfahrens kann vorgesehen sein, dass bei einer Änderung der benötigten Regelleistung eine positive Regelleistung zu einem frühen Zeitpunkt, vorzugsweise sofort in das Stromnetz eingespeist wird und/oder eine negative Regelleistung zu einem späten Zeitpunkt, vorzugsweise zum spätesten möglichen Zeitpunkt aus dem Stromnetz entnommen wird, wenn der Ladezustand des Energiespeichers oberhalb eines ersten Grenzwerts liegt und/oder bei einer Änderung der benötigten Regelleistung eine negative Regelleistung früh, vorzugsweise sofort aus dem Stromnetz entnommen wird und/oder eine positive Regelleistung zu einem späten Zeitpunkt, vorzugsweise zum spätesten möglichen Zeitpunkt in das Stromnetz eingespeist wird, wenn der Ladezustand des Energiespeichers unterhalb eines zweiten Grenzwerts liegt, wobei die beiden Grenzwerte besonders bevorzugt einen gewünschten mittleren Ladezustand definieren.

Die Kopplung der dynamischen Bereitstellung von Regelleistung durch den Energiespeicher in Abhängigkeit von seinem Ladezustand ermöglicht es in vorteilhafter Weise auf Regelleistungsanfragen zu reagieren, wobei die Kapazität des Energiespeichers so genutzt werden soll, dass er sich möglichst im mittleren Ladezustand befindet, um hierdurch eine möglichst effiziente und kostenbewusste Handhabung zu gewährleisten.

In einer weiteren Ausführungsform des erfindungsgemäßen Verfahrens wird der Energiespeicher gemeinsam mit zumindest einem Energieerzeuger und/oder zumindest einem Energieverbraucher für die Bereitstellung von Regelleistung für das Stromnetz betrieben.

Hierbei kann es insbesondere vorgesehen sein, dass der Energiespeicher in seiner Regelung und/oder Steuerung in Abhängigkeit und in Wirkverbindung mit dem zumindest einen Energieerzeuger und/oder mit dem zumindest einen Energieverbraucher bei der Bereitstellung von Regelleistung für ein Stromnetz betrieben wird.

Als Energieerzeuger kann ein Kraftwerk, vorzugsweise ein Kohlkraftwerk, Gaskraftwerk oder ein Wasserkraftwerk verwendet werden, während als Energieverbraucher ein Werk zum Herstellen einer Substanz, insbesondere ein Elektrolyse-Werk oder ein Metall-Werk, vorzugsweise ein Aluminium-Werk oder ein Stahlwerk, zum Einsatz kommen kann.

Solche Energieerzeuger und Energieverbraucher sind zur Bereitstellung von längerfristigen Regelleistungen gut geeignet. Ihre Trägheit lässt sich erfindungsgemäß gut mit Energiespeichern ausgleichen.

Des Weiteren kann vorgesehen sein, dass die ans Stromnetz maximal abgebbare Leistung, insbesondere die Nennleistung des Energieerzeugers zusammen mit dem Energiespeicher und/oder die aus dem Stromnetz maximal aufnehmbare Leistung, insbesondere die Nennleistung des Energieverbrauchers zusammen mit dem Energiespeicher, durch das Verfahren innerhalb von 15 Minuten bereitgestellt wird, vorzugsweise innerhalb von 5 Minuten, besonders bevorzugt innerhalb von 30 Sekunden, zu zumindest 95%.

Ferner kann vorgesehen sein, dass der Energieerzeuger und/oder der Energieverbraucher eine maximale Leistung von zumindest 1 MW hat oder haben, vorzugsweise zumindest 10 MW, besonders bevorzugt zumindest 100 MW.

Ferner kann vorgesehen sein, dass als Energiespeicher ein Schwungrad, ein Wärmespeicher, ein Wasserstofferzeuger und -speicher mit Brennstoffzelle, ein Erdgaserzeuger mit Gaskraftwerk, ein Pumpspeicherkraftwerk, ein Druckluftspeicherkraftwerk, ein supraleitender magnetischer Energiespeicher, ein Redox-Flow-Element und/oder ein galvanisches Element verwendet wird, vorzugsweise ein Akkumulator und/oder ein Batteriespeicherkraftwerk. Der Wärmespeicher muss zusammen mit einer Vorrichtung zur Herstellung von Strom aus der gespeicherten Wärmeenergie betrieben werden.

Zu den Akkumulatoren zählen insbesondere Bleiakkumulatoren, Natrium-Nickelchlorid-Akkumulatoren, Natrium-Schwefel-Akkumulatoren, Nickel-Eisen-Akkumulatoren, Nickel-Cadmium-Akkumulatoren, Nickel-Metallhydrid-Akkumulatoren, Nickel-Wasserstoff-Akkumulatoren, Nickel-Zink-Akkumulatoren, Zinn-Schwefel-Lithium-Ionen-Akkumulatoren, Natrium-Ionen Akkumulatoren und Kalium-Ionen-Akkumulatoren.

Hierbei sind Akkumulatoren bevorzugt, die einen hohen Wirkungsgrad sowie eine hohe betriebliche und kalendarische Lebensdauer aufweisen. Zu den bevorzugten Akkumulatoren zählen demgemäß insbesondere Lithium-Ionen-Akkumulatoren (z. B. Lithium-Polymer-Akkumulatoren, Lithium-Titanat-Akkumulatoren, Lithium-Mangan-Akkumulatoren, Lithium-Eisen-Phosphat-Akkumulatoren, Lithium-Eisen-Mangan-Phosphat-Akkumulatoren, Lithium-Eisen-Yttrium-Phosphat-Akkumulatoren) sowie Weiterentwicklungen dieser, wie zum Beispiel Lithium-Luft-Akkumulatoren, Lithium-Schwefel-Akkumulatoren und Zinn-Schwefel-Lithium-Ionen-Akkumulatoren.

Insbesondere Akkumulatoren sind aufgrund ihrer schnellen Reaktionszeit, das heißt, der Geschwindigkeit, mit der die Leistung gesteigert oder reduziert werden kann, für erfindungsgemäße Verfahren besonders geeignet. Zudem ist auch der Wirkungsgrad, insbesondere bei Li-Ionen-Akkumulatoren gut im Vergleich zu vielen anderen Energiespeichern.

Auch kann vorgesehen sein, dass der Energiespeicher eine Kapazität von zumindest 1 kWh, bevorzugt zumindest 10 kWh, besonders bevorzugt zumindest 50 kWh, ganz besonders bevorzugt zumindest 250 kWh besitzt.

Die Kapazität elektrochemischer Energiespeicher kann dabei bei zumindest 40 Ah, bevorzugt bei etwa 100 Ah liegen. Die einzelnen Zellen elektrochemischer Energiespeicher können bei zumindest 1 V, bevorzugt, bei zumindest 10 V, besonders bevorzugt bei zumindest 100 V arbeiten.

Diese Kapazitäten sind für den Betrieb eines Regelleistungs-Kraftwerks oder eines Regelleistungs-Verbrauchers noch relativ gering. Die im Vergleich zu handelsüblichen kleinen Energiespeichern, wie beispielsweise Handyakkumulatoren große Kapazität und das hohe Energiespeichervermögen sind geeignet, um die beträchtlichen Energien für die erfindungsgemäßen Verfahren auch bei großen Stromnetzen bereitstellen zu können.

Es kann ferner vorgesehen sein, dass eine Änderung der benötigten Regelleistung dadurch festgestellt wird, dass eine Änderung der Frequenzabweichung der Netzfrequenz des Stromnetzes vom Sollwert der Netzfrequenz des Stromnetzes gemessen wird, insbesondere eine Änderung der Frequenzabweichung um einen Mindestbetrag, bevorzugt um 10 mHz, wobei vorzugsweise der Betrag der Regelleistung von der Höhe der Frequenzabweichung abhängt, besonders bevorzugt bereichsweise linear proportional zur Höhe der Frequenzabweichung gewählt wird.

Bei der direkten Bestimmung der Netzfrequenz beziehungsweise der Frequenzabweichung können eigene Messapparaturen verwendet werden. Hierdurch bietet sich die Möglichkeit, die Frequenzabweichung mit einer höheren Genauigkeit zu bestimmen, als durch den Netzbetreiber vorgeschrieben. Dadurch kann eine größere Frequenztoleranz genutzt werden, um den Ladezustand des Energiespeichers zu regeln.

Hierbei kann es insbesondere bevorzugt sein, dass die Frequenzabweichung mit einer größeren Genauigkeit als für die Erbringung der Regelleistung notwendig gemessen wird, vorzugsweise mit einer Genauigkeit von zumindest ± 8 mHz, besonders bevorzugt von zumindest ± 4 mHz, ganz besonders bevorzugt von zumindest ± 2 mHz, speziell bevorzugt von zumindest ± 1 mHz.

Je höher die Genauigkeit beim Bestimmen der Frequenzabweichung der Netzfrequenz vom Sollwert durchgeführt werden kann, desto größer ist der Spielraum, der genutzt werden kann, um den Ladezustand des Energiespeichers anzupassen.

Außerdem kann es vorgesehen sein, dass eine Toleranz bezüglich der Frequenzabweichung vom Sollwert der Netzfrequenz des Stromnetzes genutzt wird, um den Ladezustand des Energiespeichers gleichzeitig mit der Bereitstellung der Regelleistung durch den Energiespeicher einzustellen.

Ferner kann es vorgesehen sein, dass die Toleranz bezüglich des Betrags der bereitgestellten Regelleistung genutzt wird, um den Ladezustand des Energiespeichers gleichzeitig mit der Bereitstellung der Regelleistung durch den Energiespeicher einzustellen, wobei vorzugsweise zur Nutzung der Toleranz bezüglich des Betrags der bereitgestellten Regelleistung der Betrag der angeforderten Regelleistung überschritten wird, insbesondere um maximal 30 % und/oder um 10 MW, besonders bevorzugt um maximal 20% und/oder um 5 MW, wobei besonders bevorzugt die prozentuale Überschreitung des Betrags der angeforderten Regelleistung proportional der Abweichung des Ladezustands des Energiespeichers von einem gewünschten mittleren Ladezustand gewählt wird.

Unter der Toleranz bezüglich des Betrags der bereitgestellten Regelleistung und der Toleranz bei der Bestimmung der Frequenzabweichung ist erfindungsgemäß zu verstehen, dass vom Netzbetreiber, aufgrund technischer Rahmenbedingungen, wie der Messgenauigkeit beim Bestimmen der erbrachten Regelleistung oder der Netzfrequenz, gewisse Abweichungen zwischen einer idealen Sollleistung und der tatsächlich erbrachten Regelleistung akzeptiert werden. Die Toleranz kann vom Netzbetreiber gewährt sein, könnte aber auch einer gesetzlichen Vorgabe entsprechen.

Der Vorteil dieser Vorgehensweisen ist darin zu sehen, dass es auch während des Erbringens der Regelleistung und damit auch kontinuierlich gelingt, den Ladezustand (Ladungszustand) des Energiespeichers beziehungsweise die im Energiespeicher enthaltene Energiemenge zu regulieren. Die Begriffe Ladungszustand und Ladezustand sind erfindungsgemäß als Äquivalent anzusehen.

Der Ladezustand entspricht im Fall von Akkumulatoren als Energiespeicher dem Ladungszustand (engl.: "State-of-Charge", SOC) oder dem Energiegehalt (engl.: State-of-Energie, SoE). Der Ladezustand kann erfindungsgemäß durch messen des "State-of-Charge" (SOC) oder des Energiegehalts des Energiespeichers bestimmt werden.

Hierbei kann es in vorteilhafter Weise vorgesehen sein, dass der Ladezustand des Energiespeichers dadurch eingestellt wird, dass für den Fall, in dem der Ladezustand des Energiespeichers oberhalb eines ersten Grenzwerts liegt, der Energiespeicher eine innerhalb der Toleranz oder der Toleranzen liegende größere Regelleistung in das Stromnetz einspeist oder eine innerhalb der Toleranz oder der Toleranzen liegende kleinere Regelleistung aus dem Stromnetz aufnimmt und/oder für den Fall, in dem der Ladezustand des Energiespeichers unterhalb eines zweiten Grenzwerts liegt, der Energiespeicher eine innerhalb der Toleranz oder der Toleranzen liegende kleinere Regelleistung in das Stromnetz einspeist oder eine innerhalb der Toleranz oder der Toleranzen liegende größere Regelleistung aus dem Stromnetz aufnimmt.

Hierdurch werden Details gegeben, wie eine erfindungsgemäße Regelung des Ladezustands erreicht werden kann. Diese Grundzüge geben allgemeingültige Eckpunkte eines erfindungsgemäßen Verfahrens wieder, das die der Erfindung zugrundeliegenden Aufgaben löst.

Dabei kann vorgesehen sein, dass der erste Grenzwert des Ladezustands zwischen 40% und 80% der maximalen Ladung des Energiespeichers liegt, vorzugsweise zwischen 45% und 70%, besonders bevorzugt zwischen 50% und 60%, und/oder der zweite Grenzwert des Ladezustands zwischen 20% und 60% der maximalen Ladung, vorzugsweise zwischen 30% und 55%, besonders bevorzugt zwischen 40 % und 50%, oder der erste und der zweite Grenzwert des Ladezustands bei 50% der maximalen Ladung des Energiespeichers liegen.

Die genannten Bereiche für die Grenzwerte des Ladezustands des Energiespeichers sind erfindungsgemäß für die Realisierung erfindungsgemäßer Verfahren besonders geeignet. Insbesondere bei einer großen Kapazität des Energiespeichers können die Grenzwerte auch bei 80% beziehungsweise 20% der maximalen Ladung des Energiespeichers liegen.

Ferner kann dabei vorgesehen sein, dass der erste und/oder der zweite Grenzwert des Ladezustands in Abhängigkeit davon gewählt werden, ob positive oder negative Regelleistung benötigt wird, so dass bei einer Anforderung nach positiver Regelleistung der erste Grenzwert und/oder der zweite Grenzwert des Ladezustands bei einer größeren Ladung des Energiespeichers gewählt wird und bei einer Anforderung nach negativer Regelleistung der erste Grenzwert und/oder der zweite Grenzwert des Ladezustands bei einer kleineren Ladung des Energiespeichers gewählt wird, wobei die Grenzwerte vorzugsweise als Funktion der Frequenzabweichung der Netzfrequenz gewählt werden.

Durch diese Maßnahmen kann der Ladezustand des Energiespeichers noch besser angepasst werden.

Eine besonders bevorzugte Ausgestaltung eines erfindungsgemäßen Verfahrens ergibt sich, wenn vorgesehen ist, dass ein Regelleistungsgradient in Abhängigkeit vom Ladezustand des Energiespeichers gewählt wird, wobei insbesondere der zeitliche Verlauf des Betrags der Regelleistung eingestellt und die Toleranz des Betrags der bereitzustellenden Regelleistung über die Zeit genutzt wird.

Dabei wird genutzt, dass es beispielsweise durch den Netzbetreiber oder auch durch gesetzliche Vorgaben Toleranzen bezüglich des Anstiegs oder Abfalls der bereitzustellenden Regelleistung gibt. Diese Toleranzen können erfindungsgemäß genutzt werden, um den Ladezustand des Energiespeichers anzupassen. Hierdurch ergibt sich eine weitere Verbesserung bei der Ladezustandsoptimierung, beziehungsweise diese Ausführungsform stellt eine besonders bevorzugte Realisierung des erfindungsgemäßen Verfahrens dar. Dadurch kann die Größe, beziehungsweise die Kapazität des Energiespeichers weiter reduziert werden.

Ferner kann besonders bevorzugt vorgesehen sein, dass bei einer Änderung der Frequenzabweichung um weniger als einen Unempfindlichkeitsbereich, insbesondere um weniger als 10 mHz, eine veränderte Regelleistung nur erbracht wird, um den Ladezustand des Energiespeichers einzustellen, insbesondere die veränderte Regelleistung nur dann erbracht wird, wenn sich der Ladezustand des Energiespeichers dadurch möglichst stark zum mittleren Ladezustand hin oder möglichst wenig vom mittleren Ladezustand weg bewegt.

Die Änderung der Frequenzabweichung bezieht sich hierbei auf diejenige Frequenzabweichung, bei der die letzte Regelleistungsanpassung erfolgte. Hierbei wird eine weitere Toleranz genutzt. Diese Toleranz kann durch den Netzbetreiber oder den Gesetzgeber oder systemimmanent gegeben sein. Die Toleranz erlaubt es, dass wenn nur geringe Änderungen der Frequenzabweichung der Netzfrequenz von der Sollfrequenz auftreten, dass dann keine Anpassung der Regelleistung erfolgen muss. Um den Ladezustand des Energiespeichers in die gewünschte Richtung zu entwickeln, kann dennoch Regelleistung erbracht werden. Diese Regelleistungserbringung erfolgt gegebenenfalls in der Art, wie dies erwünscht ist, also beispielsweise direkt antiproportional zur Frequenzabweichung. Wenn also Regelleistung zur Anpassung des Ladezustands erbracht wird, würde dies zur Regelung der Netzfrequenz beitragen. Die Anpassung des Ladezustands erfolgt also immer konstruktiv im Sinne der Regelung der Netzfrequenz. Voraussetzung dafür ist, dass die Frequenzabweichung mit einer höheren Genauigkeit als der Unempfindlichkeitsbereich gemessen werden kann. Der Unempfindlichkeitsbereich ist ein Maß für die Toleranz der Änderung der Frequenzabweichung, ab der eine Änderung der Regelleistung gefordert wird oder notwendig ist.

Die Aufgabe der Erfindung wird bezüglich einer Vorrichtung dadurch gelöst, dass die Vorrichtung zumindest einen Energiespeicher und eine Steuerung zum Steuern und/oder Regeln der Leistung des Energiespeichers umfasst, wobei der Energiespeicher derart an ein Stromnetz angeschlossen ist, dass durch die Vorrichtung Energie in das Stromnetz einspeisbar und aus dem Stromnetz entnehmbar ist.

Unter einer Steuerung wird erfindungsgemäß vorliegend eine einfache Steuerung verstanden. Hierbei sei angemerkt, dass jede Regelung eine Steuerung umfasst, da bei einer Regelung eine Steuerung in Abhängigkeit von einer Differenz eines Istwerts zu einem Sollwert erfolgt. Bevorzugt ist die Steuerung also als Regelung ausgebildet, insbesondere bezüglich des Ladezustands. Besonders bevorzugt ist die Steuerung ein Leitsystem.

Dabei kann vorgesehen sein, dass die Vorrichtung zumindest einen Energieerzeuger und/oder zumindest einen Energieverbraucher umfasst, der oder die derart an das Stromnetz angeschlossen ist oder sind, dass durch den Energieerzeuger Regelleistung in das Stromnetz einspeisbar und/oder durch den Energieverbraucher aus dem Stromnetz entnehmbar ist und der Energiespeicher vorzugsweise durch den Energieerzeuger aufladbar und/oder durch den Energieverbraucher entladbar ist.

Ferner kann auch vorgesehen sein, dass die Vorrichtung eine Vorrichtung zum Messen des Ladezustands des zumindest einen Energiespeichers und einen Datenspeicher umfasst, wobei in dem Datenspeicher der gewünschte mittlere Ladezustand des Energiespeichers gespeichert ist, wobei die Steuerung auf den Datenspeicher Zugriff hat und dazu ausgelegt ist, in Abhängigkeit von dem Ladezustand des Energiespeichers die vom Energiespeicher abgegebene und/oder aufgenommene Regelleistung zu steuern.

Schließlich kann auch vorgesehen sein, dass der Energiespeicher ein Akkumulator ist, vorzugsweise ein Lithium-Ionen-Akkumulator, ein Blei-Schwefelsäure-Akkumulator, ein Nickel-Cadmium-Akkumulator, ein Natriumsulfid-Akkumulator und/oder ein Li-Ionen-Akkumulator und/oder ein Verbund aus zumindest zwei dieser Akkumulatoren ist.

Der Erfindung liegt die überraschende Erkenntnis zugrunde, dass Energiespeicher derart betrieben werden können, dass die von den Netzbetreibern gegebenen Toleranzen beim Erbringen von Regelleistung dazu genutzt werden, den Ladezustand des Energiespeichers in einem mittleren Bereich zu halten und so die Kapazität des Energiespeichers in einem kostengünstigen Rahmen zu halten. Dies gilt insbesondere für Energiespeicher, die Energie schnell, das heißt mit hohen Leistungsgradienten aufnehmen und abgeben können, wie zum Beispiel Schwungräder und insbesondere Akkumulatoren und Batteriespeichern. Die von den Netzbetreibern eingeräumten Toleranzen rühren daher, dass die Regelleistung derzeit zumeist von größeren Kraftwerken, wie beispielsweise Kohlekraftwerken und größeren Verbrauchern, wie beispielsweise Elektrolyse-Werken bereitgestellt wird. Diese Regelleistungslieferanten haben eine große Trägheit bei der Aufnahme und Abgabe von Regelleistung, das heißt, dass ihre Leistungsgradienten klein sind und Effekte wie Überschwingen in einem gewissen Rahmen unvermeidbar sind. Daher werden gewisse Toleranzen eingeräumt. So müssen beispielsweise Regelleistungslieferanten nicht schon bei kleinsten Abweichungen Regelleistung liefern, sondern es wird eine Toleranz bei der Frequenzabweichung der Netzfrequenz eingeräumt, ab der Regelleistung zur Verfügung gestellt werden muss. Somit kann sichergestellt werden, dass die Bereitstellung von Regelleistung ausschließlich der Stabilisierung der Netzfrequenz dient. Ferner wird eine Toleranz bei der Messung der Frequenzabweichung der Netzfrequenz eingeräumt, so dass die zu erbringende Regelleistung in einem gewissen Rahmen (in einer Toleranz) frei gewählt werden kann, sofern die Frequenzabweichung genauer gemessen werden kann.

Für die vorliegende Erfindung wird vor allem genutzt, dass der Zeitpunkt, ab dem eine veränderte Regelleistung nach einer Änderung der erforderlichen Regelleistung, also einer Änderung des Sollwerts der Regelleistung erbracht werden muss, nachdem sich die erforderliche Regelleistung geändert hat, eine Toleranz hat, die von der Art der zu erbringenden Regelleistung abhängen kann. Letztere Toleranz wird erfindungsgemäß genutzt, um den Ladezustand des Energiespeichers anzupassen, in dem mehr oder weniger Energie in den Energiespeicher eingespeichert wird oder mehr oder weniger Energie aus dem Energiespeicher an das Stromnetz abgegeben wird. Durch die Steuerung mit dem Energiespeicher wird in Abhängigkeit vom Ladezustand (also bei Bedarf) eine trägere Regelleistungsquelle erzeugt, um den Ladezustand des Energiespeichers anzupassen.

Eine weitere Toleranz ergibt sich auch bei der Genauigkeit welche Leistung in das Stromnetz eingespeist oder aus dem Stromnetz aufgenommen werden kann. Dabei ist es für den Netzbetreiber meist nicht wichtig ob die geforderte Regelleistung erbracht wird oder ob diese um einen bestimmten Betrag überschritten oder geringfügig unterschritten wird.

Diese Toleranzen können genutzt werden um mehr oder weniger Regelleistung zur Verfügung zu stellen und so den Energiespeicher gezielt stärker oder weniger stark zu laden oder zu entladen. Dadurch kann der Ladezustand gezielt beeinflusst werden. So gelingt es erfindungsgemäß den Ladezustand in einem gewünschten, beispielsweise in einem mittleren Bereich zu halten, so dass der Energiespeicher sich in einem guten oder sogar optimalen Ausgangszustand für die nächste oder eine geänderte Regelleistungsanfrage befindet.

Der Ladezustand muss dann nicht mehr oder kann mit weniger Energie aus dem Stromnetz reguliert werden. Zudem kann die Kapazität des Energiespeichers kleiner gewählt werden. Beides spart Kosten.

Batteriespeicher (Akkumulatoren) zeichnen sich gegenüber konventionellen Technologien zur Bereitstellung von Primär- und/oder Sekundärregelleistungen unter anderem dadurch aus, dass sie deutlich schneller die erbrachten Leistungen ändern können. In den meisten Fällen ist bei Batteriespeichern jedoch nachteilig, dass sie über eine vergleichsweise geringe Speicherkapazität verfügen, die erforderlichen Leistungen also nur über einen begrenzten Zeitraum erbringen können. Bei einer statistischen Auswertung der Frequenzabweichungen über die Zeit wurde im Rahmen der vorliegenden Erfindung überraschend gefunden, dass die angeforderten Leistungen in mehr als 75 % der aktiven Zeit (das heißt, es wird eine von Null abweichende Leistung erbracht) weniger als 10% der Maximal-Leistung beziehungsweise der vermarkteten Leistung betragen.

Aus dieser erfindungsgemäßen Erkenntnis ergibt sich ebenfalls, dass die Kapazität des Energiespeichers und damit die bereitzuhaltende gespeicherte Regelleistungsmenge geringer gewählt werden kann und es mit einem erfindungsgemäßen Verfahren besonders gut gelingen kann, die Kapazität des Energiespeichers klein zu halten.

Dabei wird erfindungsgemäß genutzt, dass es mit modernen Messvorrichtungen und Messverfahren möglich ist, die Frequenzabweichung genauer zu bestimmen, als es derzeit für die Erbringung von Regelleistung gefordert wird. Dadurch ist es möglich die zu erbringende Regelleistung innerhalb der vorgegebenen Toleranzen (also innerhalb der vorgegebenen Grenzen) frei zu wählen und dadurch das Verfahren zu realisieren.

Spezielle und besonders bevorzugte Ausführungsformen der Lösungsansätze bestehen darin, dass es sich bei dem Energiespeicher um einen Akkumulator oder Batteriespeicher handelt, der zur Erbringung von Primärregelleistung eingesetzt wird.

In einer weiteren speziellen Ausführungsform kann die bei negativer PR- oder SR-Leistung in den Energiespeicher aufgenommene Energie am Spotmarkt veräußert werden, insbesondere wenn die Konditionen dort vorteilhaft sind.

Gemäß einer weiteren Ausführungsform kann im Rahmen der Vorgaben zur Erbringung von Regelleistung vorgesehen sein, dass durch den Energiespeicher insbesondere mehr Energie aus dem Netz aufgenommen als eingespeist wird. Dies kann dadurch erfolgen, dass gemäß den Regularien einschließlich der zuvor dargelegten Verfahrensweise bevorzugt sehr viel negative Regelleistung bereitgestellt wird, wohingegen gemäß den Regularien einschließlich der zuvor dargelegten Vorgehensweise bevorzugt nur die mindestens zugesicherte Leistung an positiver Regelleistung erbracht wird. Vorzugsweise wird durchschnittlich mindestens 0,1 % mehr an Energie aus dem Netz entnommen als eingespeist, insbesondere mindestens 0,2 %, bevorzugt mindestens 0,5 %, besonders bevorzugt mindestens 1,0%, speziell bevorzugt 5%, wobei diese Werte auf einen Durchschnitt bezogen sind, der über einen Zeitraum von mindestens 15 Minuten, vorzugsweise mindestens 4 Stunden, besonders bevorzugt mindestens 24 Stunden und speziell bevorzugt mindestens 7 Tage gemessen wird, und sich auf die eingespeiste Energie beziehen.

Hierbei kann die zuvor dargelegte Regelleistungserbringung eingesetzt werden, um ein Maximum an Energie aus dem Netz zu entnehmen, wobei die maximal mögliche negative Regelleistung bereitgestellt wird, wohingegen nur ein Minimum an positiver Regelleistung erbracht wird.

In den Ausführungsformen zur bevorzugten und speziell zur maximalen Energieaufnahme können die hierdurch aus dem Netz entnommenen Energien über den zuvor beschriebenen Energiehandel verkauft werden, wobei dies vorzugsweise zu Zeitpunkten erfolgt, zu denen ein höchstmöglicher Preis zu erzielen ist. Hierzu können Prognosen über die Preisentwicklung herangezogen werden, die auf historischen Daten beruhen.

Weiterhin kann der Ladezustand des Energiespeichers zum Zeitpunkt eines geplanten Verkaufs an Energie vorzugsweise mindestens 70 %, besonders bevorzugt mindestens 80 % und besonders bevorzugt mindestens 90 % der Speicherkapazität betragen, wobei der Ladezustand nach dem Verkauf bevorzugt höchstens 80 %, insbesondere höchstens 70 % und besonders bevorzugt höchstens 60 % der Speicherkapazität beträgt.

In bevorzugten Ausführungsformen der Erfindung werden mehrere Energiespeicher gepoolt und in erfindungsgemäßer Verfahrensweise betrieben. Die Größe der Energiespeicher innerhalb des Pools kann dabei variieren. In einer besonders bevorzugten Ausführungsform wird bei den verschiedenen Energiespeichern eines Pools im Fall der Ausnutzung von Toleranzen der Wechsel von einer Parametereinstellung auf eine andere nicht die synchron, sondern gezielt zeitlich versetzt vorgenommen, um etwaige Störungen im Netz möglichst gering oder zumindest tolerabel zu halten.

In einer weiteren bevorzugten Ausführungsform variieren die bei den verschiedenen Verfahrensweisen genutzten Toleranzen abhängig von der Tageszeit, dem Wochentag oder der Jahreszeit. Zum Beispiel können in einem Zeitraum von 5 min vor bis 5 min nach dem Stundenwechsel werden die Toleranzen enger definiert werden. Dies ist darin begründet, dass hier oft sehr rapide Frequenzänderungen stattfinden. Es kann im Interesse der Übertragungsnetzbetreiber liegen, dass hier geringere Toleranzen vorliegen und damit die Regelenergiebereitstellung sicherer im Sinne von schärfer erfolgt.

Im Folgenden werden Ausführungsbeispiele der Erfindung anhand von drei schematisch dargestellten Figuren erläutert, ohne jedoch dabei die Erfindung zu beschränken. Dabei zeigt:
- Figur 1:: ein Ablaufdiagramm für ein erfindungsgemäßes Verfahren;
- Figur 2:: ein schematisches Regelleistungs/Zeit-Diagramm für ein erfindungsgemäßes Verfahren; und
- Figur 3:: eine schematische Darstellung einer erfindungsgemäßen Vorrichtung zur Bereitstellung von Regelleistung.

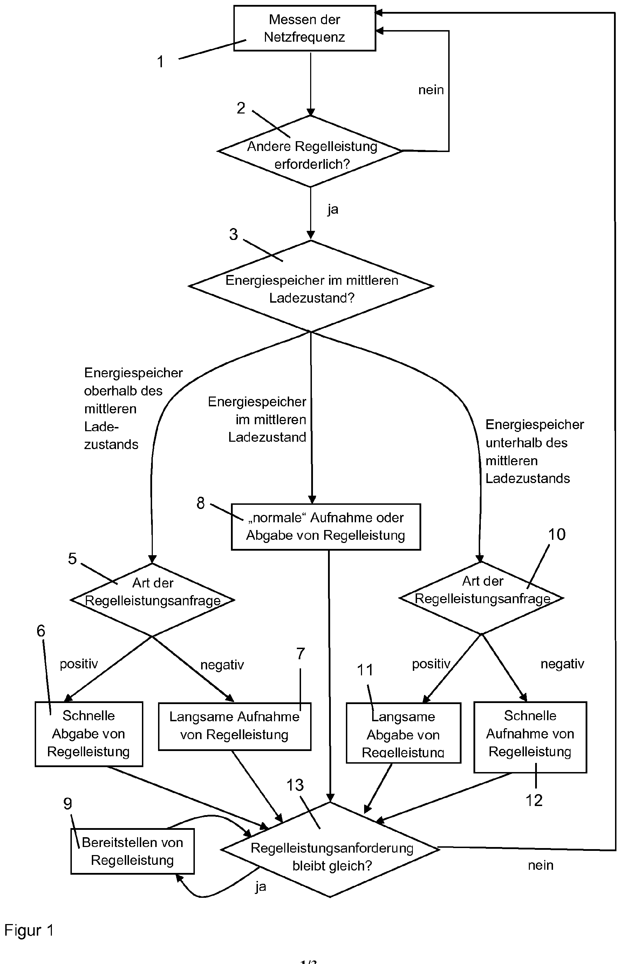

Figur 1 zeigt ein Ablaufdiagramm für ein erfindungsgemäßes Verfahren. Hierbei beginnt der Kreislauf mit dem Verfahrensschritt 1 bei dem die Netzfrequenz eines Stromnetzes gemessen wird. In Entscheidungsschritt 2 wird geprüft, ob eine Änderung der Regelleistung erforderlich ist. Wenn es also zu einer veränderten Regelleistungsanfrage eines Netzbetreibers kommt oder ein Bedarf an Regelleistung durch Messen der Frequenzabweichung von dem Sollwert der Netzfrequenz gemessen wird, wird zunächst in einem darauffolgenden Entscheidungsschritt 3 der Ladezustand eines Energiespeichers überprüft, um festzustellen, ob der Energiespeicher sich in dem Bereich des gewünschten mittleren Ladezustands befindet oder nicht.

Falls dies der Fall ist, kommt es in einem Verfahrensschritt 8 zu einer "normalen" Bereitstellung von Regelleistung durch den Energiespeicher, wobei von einer "normalen" Bereitstellung gesprochen wird, wenn es zu keiner beschleunigten und/oder verlangsamten Abgabe oder Aufnahme von Regelleistung durch den Energiespeicher kommt, sondern der Energiespeicher mitten im zulässigen Zeitintervall in Abhängigkeit von der Art der nachgefragten Regelleistung eine solche Regeleistung bereitstellt.

Falls im Entscheidungsschritt 3 hingegen festgestellt wird, dass der Ladezustand des Energiespeichers sich oberhalb des mittleren Ladezustands des Energiespeichers befindet, wird in einem Entscheidungsschritt 5 geprüft, ob positive oder negative Regelleistung nachgefragt wird.

Im Falle eines Bedarfs an positiver Regelleistung bei einem Ladezustand des Energiespeichers oberhalb des mittleren Ladezustands des Energiespeichers kommt es in einem Verfahrensschritt 6 zu einer schnellen Abgabe von Regelleistung vom Energiespeicher an das Stromnetz, so dass die angeforderte Regelleistung zu einem möglichst frühen Zeitpunkt, vorzugsweise sofort, nach dem Zeitpunkt der Regelleistungsanfrage, in das Stromnetz eingespeist wird.

Im Falle eines Bedarfs an negativer Regelleistung bei einem Ladezustand des Energiespeichers oberhalb des mittleren Ladezustands des Energiespeichers kommt es in einem Verfahrensschritt 7 zu einer langsamen Aufnahme von Regelleistung aus dem Stromnetz in den Energiespeicher, wobei diese Regelleistung zu einem möglichst späten Zeitpunkt, vorzugsweise zum spätesten möglichen Zeitpunkt, nach dem Zeitpunkt der Regelleistungsanfrage, aus dem Stromnetz entnommen wird.

Falls im Entscheidungsschritt 3 hingegen festgestellt wird, dass der Ladezustand des Energiespeichers sich unterhalb des mittleren Ladezustands des Energiespeichers befindet, wird in einem Entscheidungsschritt 10 geprüft, ob positive oder negative Regelleistung nachgefragt wird.

Im Falle eines Bedarfs an positiver Regelleistung bei einem Ladezustand des Energiespeichers unterhalb des mittleren Ladezustands des Energiespeichers kommt es in einem Verfahrensschritt 11 zu einer langsamen Abgabe von Regelleistung vom Energiespeicher in das Stromnetz, wobei diese Regelleistung zu einem möglichst späten Zeitpunkt, vorzugsweise zum spätesten möglichen Zeitpunkt, nach dem Zeitpunkt der Regelleistungsanfrage, in das Stromnetz eingespeist wird.

Im Falle eines Bedarfs an negativer Regelleistung bei einem Ladezustand des Energiespeichers unterhalb des mittleren Ladezustands des Energiespeichers kommt es in einem Verfahrensschritt 12 zu einer schnellen Aufnahme von Regelleistung aus dem Stromnetz in den Energiespeicher, wobei diese Regelleistung zu einem möglichst frühen Zeitpunkt, vorzugsweise sofort, nach dem Zeitpunkt der Regelleistungsanfrage, aus dem Stromnetz entnommen wird.

In einem Entscheidungsschritt 13 wird schließlich geprüft, ob die Regelleistungsanforderung des Netzbetreibers gleich geblieben ist und somit kein veränderter Bedarf an Regelleistung vorliegt. Falls dies der Fall ist, wird die Regelleistung in Schritt 9 wie zuvor bereitgestellt und weiter geprüft, ob sich die Regelleistungsanforderung ändert. Falls sich der Bedarf an Regelleistung ändert, wird mit Verfahrensschritt 1 fortgefahren. In Verfahrensschritt 9 kann vorgesehen sein, dass der Ladezustand des Energiespeichers dadurch angepasst wird, dass Toleranzen bei der Leistungserbringung bezüglich der Leistung und bezüglich einer Frequenzabweichung genutzt werden, um je nach Ladezustand des Energiespeichers mehr oder weniger Regelleistung ins Netz ein oder auszuspeisen. Dazu werden im Rahmen dieser Toleranzen immer eine etwas höhere Leistung und/oder eine etwas niedrigere Leistung als Regelleistung bereitgestellt, als dies der eigentlich angeforderten Regelleistung entsprechen würde.

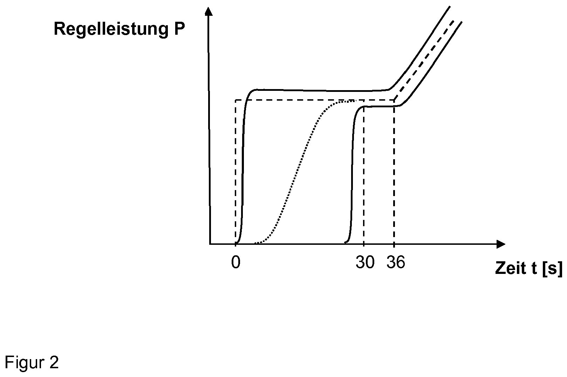

Figur 2 zeigt ein schematisches Regelleistungs-Zeit-Diagramm anhand dessen ein erfindungsgemäßes Verfahren zur Bereitstellung von Regelleistung mit einem Energiespeicher erläutert werden soll. Die gestrichelte Linie zeigt beispielhaft eine positive Regelleistungsanforderung durch einen Netzbetreiber, die beispielsweise durch die Messung einer Frequenzabweichung von einem Sollwert der Netzfrequenz (in Europa 50,000 Hz) bestimmt wird.

Zum Zeitpunkt t = 0 Sekunden gibt es eine positive Regelleistungsanfrage, das heißt, es soll dem Stromnetz eine Regelleistung zur Verfügung gestellt werden. Erfindungsgemäß kann nun die Regelleistung in Abhängigkeit davon erbracht werden, wie der Ladezustand des Energiespeichers ist, mit dem die Regelleistung erbracht wird. Ist der Ladezustand niedriger als gewünscht, also beispielsweise unterhalb eines Grenzwerts, dann sollte möglichst wenig Energie zusätzlich aus dem Energiespeicher entnommen werden. Eine Regelleistungsbereitstellung hierfür ist anhand der rechten unteren Kurve dargestellt. Ist der Ladezustand höher als gewünscht, also beispielsweise oberhalb eines zweiten oder des gleichen Grenzwerts, dann sollte möglichst viel Energie zusätzlich aus dem Energiespeicher entnommen werden. Eine Regelleistungsbereitstellung hierfür ist durch die linke obere Kurve dargestellt. Liegt der Ladezustand im mittleren Normbereich, so kann ein Kurvenverlauf in dem Bereich zwischen den beiden Kurven gewählt werden, wobei zumindest nach 30 Sekunden immer genau der gewünschte Sollwert der Regelleistung erbracht wird. Die 30 Sekunden (für PRL) sind die zeitliche Toleranz, die der Netzbetreiber einräumt, um die angeforderte Regelleistung zu erbringen.

Wenn der Energiespeicher sehr voll geladen ist, wird ein Betrag der positiven Regelleitung erbracht, der im Rahmen der Toleranz etwas höher als gewünscht ist und der Betrag wird so schnell wie möglich erbracht. Die gezeigten Rampen insbesondere der gepunkteten Linie (siehe unten) dienen der Anpassung des Ladezustands des Energiespeichers.

Im Rahmen der Regulierungen für die Primärregelleistung ist es jedoch möglich, die volle Leistung erst nach 30 Sekunden zu erbringen. Diese Toleranz wird ausgenutzt, wenn der Ladezustand des Energiespeichers niedriger als gewünscht ist. Dann wird die volle Regelleistung erst zum spätesten möglichen Zeitpunkt erbracht, also so, dass im Falle von PRL die Regelleistung erst 30 Sekunden nach der Regelleistungsanfrage erbracht wird. Alternativ kann auch nicht die volle Regelleistung erbracht werden, sondern eine etwas niedrigere, sofern die Toleranzen bei der Leistungserbringung oder der Frequenzabweichung zur Bestimmung des Betrags der Regelleistung dies erlauben.

Ab einem Zeitraum 36 Sekunden nach der Regelleistungsanforderung, muss aufgrund einer immer stärker werdenden Frequenzabweichung die Regelleistung erhöht werden (hier vereinfacht in etwa linear dargestellt). Dies wird wieder abhängig vom Ladezustand des Energiespeichers gemacht, wobei hierzu die Toleranzen bei der Bestimmung der Frequenzabweichung und/oder bei der Leistungsbereitstellung genutzt werden.

Die Fläche zwischen den beiden Kurven mit durchgezogener Linie entspricht der Energiedifferenz, die sich durch die verschiedenen Betriebsweisen des Energiespeichers ergibt, je nachdem, ob dieser stärker als gewünscht geladen ist oder weniger als gewünscht geladen ist und dementsprechend der Energiespeicher entladen oder geladen werden soll. Diese Energiedifferenz kann also genutzt werden, um den Ladezustand des Energiespeichers anzupassen. Die Anpassung kann erfindungsgemäß während eine Regelleistungsanfrage erfolgen und/oder auch während eine Regelleistung geliefert wird.

Bei einer negativen Regelleistungsanfrage (Energie muss aus dem Stromnetz aufgenommen werden) kann eine solche Diskussion anhand des gleichen Diagramms durchgeführt werden, wobei die rechte untere Kurve bei einem Ladezustand des Energiespeichers verwendet würde, der oberhalb eines dritten Grenzwerts geladen ist und die linke obere Kurve bei einem Ladezustand des Energiespeichers verwendet würde, der unterhalb eines vierten Grenzwerts geladen ist.

Die horizontale Zeitachse muss nicht notwendigerweise die Achse der Regelleistung am Nullpunkt schneiden. Es kann bei einer Änderung der notwendigen Regelleistung auch von einer ursprünglichen Regelleistung ausgegangen werden, die nicht Null entspricht.

Zwischen den beiden Kurven mit durchgezogener Linie ist eine weitere mögliche Kurve mit gepunkteter Linie eingezeichnet, bei der auch der Regelleistungsgradient angepasst wurde, um den Ladezustand des Energiespeichers anzupassen. Es kann also, ganz allgemein und nicht nur auf das vorliegende Ausführungsbeispiel nach Figur 2 bezogen, durch ein erfindungsgemäßes Verfahren ein Übertragungsverhalten des Energiespeichers mit einer Trägheit höherer Ordnung simuliert werden. Es ist also möglich, nicht nur den Zeitpunkt der Regelleistungserbringung, sondern auch den Regelleistungsanstieg sowie die Form dieser Kurve, also allgemein den Regelleistungsgradienten anzupassen.

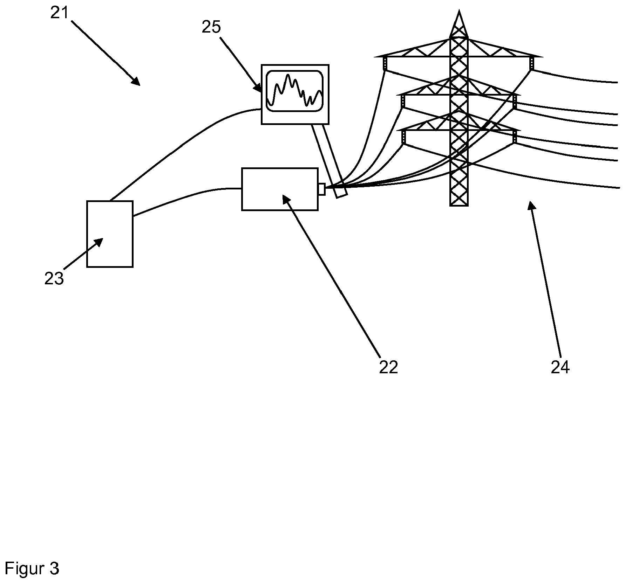

Figur 3 zeigt in schematischer Ansicht eine erfindungsgemäße Vorrichtung 21 umfassend einen Energiespeicher 22. Eine Steuerung 23 ist mit dem Energiespeicher 22 verbunden, so dass die Steuerung 23 die Leistungsaufnahme und -abgabe des Energiespeichers 22 einstellen kann.

Der Energiespeicher 22 ist an ein Stromnetz 24 angeschlossen und kann Leistung aus dem Stromnetz 24 aufnehmen und/oder abgeben. Die Steuerung 23 ist mit einer Vorrichtung 25 zum Messen der Abweichung zwischen aktueller Netzfrequenz und dem Sollwert der Netzfrequenz (in Europa 50,000 Hz) des Stromnetzes 24 verbunden, um festzustellen, ob eine Regelleistung erbracht werden muss oder nicht. Wenn ein Bedarf an Regelleistung - positiver oder negativer Regelleistung - besteht, erzeugt die Steuerung 23 ein Signal. Anschließend wird die Regelleistung des Energiespeichers 22 geändert, insbesondere in Abhängigkeit von dem erzeugten Signal geregelt. Die Vorrichtung 25 ist dazu in der Lage, die Frequenzabweichung der Netzfrequenz genauer als gefordert zu bestimmen. So kann die Toleranz bei der Bestimmung der Netzfrequenz dazu genutzt werden, den Ladezustand des Energiespeichers 22 einzustellen.

Der Ladezustand des Energiespeichers 22 kann über eine geeignete Messeinrichtung durch die Steuerung 23 bestimmt werden, um ein erfindungsgemäßes Verfahren umzusetzen.

Die Steuerung 23 kann den Energiespeicher 22 dabei so laden oder entladen, dass ein bestimmter gewünschter Ladezustand angestrebt wird. Dabei wird die zeitliche Toleranz genutzt, die der Netzbetreiber seinen Regelleistungslieferanten zugesteht. Es wird also die angeforderte Leistung zu einem frühen Zeitpunkt oder zu einem späteren Zeitpunkt erbracht. Diese Energiedifferenz dabei wird genutzt, um den Ladezustand des Energiespeichers 22 anzupassen.

Ferner können Toleranzen bei der Frequenzabweichung, ab der eine Regelleistung erbracht werden soll, und Toleranzen bei dem Betrag der bei einer bestimmten Frequenzabweichung zu erbringenden Regelleistung, beziehungsweise Toleranzen bei der Bestimmung der Frequenzabweichung, sowie Toleranzen bei der maximal zu erbringenden präqualifizierten Regelleistung dazu genutzt werden, den Ladezustand des Energiespeichers 22 in die gewünschte Richtung zu entwickeln. So kann zum Beispiel die Leistung des Energiespeichers 22 schon bei einer geringeren Frequenzabweichung als bei einer Frequenzabweichung von 10 mHz bereitgestellt werden, um den Energiespeicher 22 zu laden oder zu entladen, wenn dies notwendig erscheint. Ebenso kann eine Übererfüllung von bis zu 20% über die maximale Regelleistung hinaus durch den Energiespeicher 22 erzeugt werden, um den Ladezustand des Energiespeichers 22 zu regeln.
Insbesondere in solchen Fällen ist ein besonders schnell reagierender und leicht auf- und entladbarer Energiespeicher 22 besonders vorteilhaft. Am besten sind hierfür Akkumulatoren geeignet. Insbesondere Li-Ionen Akkumulatoren sind ohne schädliche Einflüsse auf den Akkumulator schnell und häufig auf- und entladbar, so dass diese erfindungsgemäß für alle Ausführungsbeispiele besonders geeignet und bevorzugt sind. Dazu müssen Li-Ionen Akkumulatoren mit beträchtlicher Kapazität bereitgestellt werden. Diese sind beispielsweise leicht in einem oder mehreren 40-Fuß-ISO-Containern unterzubringen.
Eine erfindungsgemäße Vorrichtung 21 ist also als Primärregelleistungsquelle oder auch als Sekundärregelleistungsquelle besonders gut geeignet.
Für Einzelheiten zur Regelung von Regelleistung und zum Informationsaustausch mit den Netzbetreibern sei auf das Forum Netztechnik/Netzbetrieb im VDE (FNN) "TransmissionCode 2007" vom November 2009 verwiesen.

### Bezugszeichenliste

- P: Leistung
- t: Zeit
- 2; 3; 5; 10; 13: Entscheidungsschritt
- 1; 6; 7; 8; 9; 11; 12: Verfahrensschritt
- 21: Vorrichtung zum Bereitstellen von Regelleistung
- 22: Energiespeicher
- 23: Steuerung
- 24: Stromnetz
- 25: Vorrichtung zum Bestimmen der Frequenzabweichung

## Patentansprüche

1. Verfahren zur Bereitstellung von Regelleistung für ein Stromnetz (24), bei dem zumindest ein an das Stromnetz (24) angeschlossener Energiespeicher (22) dem Stromnetz (24) nach Bedarf Energie zuführt und/oder aus dem Stromnetz (24) nach Bedarf Energie aufnimmt, **dadurch gekennzeichnet, dass** bei einer Änderung der benötigten Regelleistung der Zeitpunkt nach der Änderung, ab dem vom Energiespeicher (22) eine veränderte Regelleistung bereitgestellt wird, in Abhängigkeit vom aktuellen Ladezustand des Energiespeichers (22) gewählt wird,
dass der Zeitpunkt in einem Zeitintervall zwischen der Änderung der benötigten Regelleistung und einer maximalen Zeit nach der Änderung liegt, wobei vorzugsweise das Zeitintervall von der Art der nachgefragten Regelleistung abhängt, wobei insbesondere das Zeitintervall im Falle einer Bereitstellung von Primärregelleistung 30 Sekunden, im Falle einer Bereitstellung von Sekundärregelleistung 5 Minuten und im Falle einer Bereitstellung von Minutenreserve 15 Minuten beträgt,
und dass
bei einer Änderung der benötigten Regelleistung eine positive Regelleistung zu einem frühen Zeitpunkt, vorzugsweise sofort in das Stromnetz (24) eingespeist wird und/oder eine negative Regelleistung zu einem späten Zeitpunkt, vorzugsweise zum spätesten möglichen Zeitpunkt aus dem Stromnetz (24) entnommen wird, wenn der Ladezustand des Energiespeichers (22) oberhalb eines ersten Grenzwerts liegt und/oder bei einer Änderung der benötigten Regelleistung eine negative Regelleistung früh, vorzugsweise sofort aus dem Stromnetz (24) entnommen wird und/oder eine positive Regelleistung zu einem späten Zeitpunkt, vorzugsweise zum spätesten möglichen Zeitpunkt in das Stromnetz (24) eingespeist wird, wenn der Ladezustand des Energiespeichers (22) unterhalb eines zweiten Grenzwerts liegt, wobei die beiden Grenzwerte besonders bevorzugt einen gewünschten mittleren Ladezustand definieren.

2. Verfahren nach Anspruch 1, **dadurch gekennzeichnet, dass** eine Änderung der benötigten Regelleistung dadurch festgestellt wird, dass eine Änderung der Frequenzabweichung der Netzfrequenz des Stromnetzes (24) vom Sollwert der Netzfrequenz des Stromnetzes (24) gemessen wird, insbesondere eine Änderung der Frequenzabweichung um einen Mindestbetrag, bevorzugt um 10 mHz, wobei vorzugsweise der Betrag der Regelleistung von der Höhe der Frequenzabweichung abhängt, besonders bevorzugt bereichsweise linear proportional zur Höhe der Frequenzabweichung gewählt wird.

3. Verfahren nach Anspruch 1 oder 2, **dadurch gekennzeichnet, dass** die Frequenzabweichung mit einer größeren Genauigkeit als für die Erbringung der Regelleistung notwendig gemessen wird, vorzugsweise mit einer Genauigkeit von zumindest ± 8 mHz, besonders bevorzugt von zumindest ± 4 mHz, ganz besonders bevorzugt von zumindest ± 2 mHz, speziell bevorzugt von zumindest ± 1 mHz.

4. Verfahren nach einem der vorangehenden Ansprüche, **dadurch gekennzeichnet, dass**
durch die Wahl des Zeitpunkts der Ladezustand des Energiespeichers (22) angepasst wird, insbesondere ein gewünschter mittlerer Energiegehalt im Energiespeicher (22) angestrebt wird, wobei der gewünschte mittlere Energiegehalt im Bereich zwischen 20 % und 80 % des maximalen Energiegehalts im Energiespeicher (22) liegt, vorzugsweise zwischen 40 % und 60 %, besonders bevorzugt bei 50 % des maximalen Energiegehalts im Energiespeicher (22) liegt.

5. Verfahren nach einem der vorangehenden Ansprüche, **dadurch gekennzeichnet, dass**
der Energiespeicher (22) gemeinsam mit zumindest einem Energieerzeuger und/oder zumindest einem Energieverbraucher für die Bereitstellung von Regelleistung für das Stromnetz (24) betrieben wird.

6. Verfahren nach Anspruch 5, **dadurch gekennzeichnet, dass** der Energiespeicher (22) in seiner Regelung und/oder Steuerung in Abhängigkeit und in Wirkverbindung mit dem zumindest einen Energieerzeuger und/oder mit dem zumindest einen Energieverbraucher bei der Bereitstellung von Regelleistung für ein Stromnetz (24) betrieben wird.

7. Verfahren nach Anspruch 3, **dadurch gekennzeichnet, dass** eine Toleranz bezüglich der Frequenzabweichung vom Sollwert der Netzfrequenz des Stromnetzes (24) genutzt wird, um den Ladezustand des Energiespeichers (22) gleichzeitig mit der Bereitstellung der Regelleistung durch den Energiespeicher (22) einzustellen.

8. Verfahren nach einem der vorangehenden Ansprüche, **dadurch gekennzeichnet, dass**
die Toleranz bezüglich des Betrags der bereitgestellten Regelleistung genutzt wird, um den Ladezustand des Energiespeichers (22) gleichzeitig mit der Bereitstellung der Regelleistung durch den Energiespeicher (22) einzustellen, wobei vorzugsweise zur Nutzung der Toleranz bezüglich des Betrags der bereitgestellten Regelleistung der Betrag der angeforderten Regelleistung überschritten wird, insbesondere um maximal 30% und/oder um 10 MW, besonders bevorzugt um maximal 20 % und/oder um 5 MW, wobei besonders bevorzugt die prozentuale Überschreitung des Betrags der angeforderten Regelleistung proportional der Abweichung des Ladezustands des Energiespeichers (22) von einem gewünschten mittleren Ladezustand gewählt wird.

9. Verfahren nach einem der Ansprüche 7 oder 8, **dadurch gekennzeichnet, dass** der Ladezustand des Energiespeichers (22) dadurch eingestellt wird, dass für den Fall, in dem der Ladezustand des Energiespeichers (22) oberhalb eines ersten Grenzwerts liegt, der Energiespeicher (22) eine innerhalb der Toleranz oder der Toleranzen liegende größere Regelleistung in das Stromnetz (24) einspeist oder eine innerhalb der Toleranz oder der Toleranzen liegende kleinere Regelleistung aus dem Stromnetz (24) aufnimmt und/oder für den Fall, in dem der Ladezustand des Energiespeichers (22) unterhalb eines zweiten Grenzwerts liegt, der Energiespeicher (22) eine innerhalb der Toleranz oder der Toleranzen liegende kleinere Regelleistung in das Stromnetz (24) einspeist oder eine innerhalb der Toleranz oder der Toleranzen liegende größere Regelleistung aus dem Stromnetz (24) aufnimmt.

10. Verfahren nach einem der vorangehenden Ansprüche, **dadurch gekennzeichnet, dass**
ein Regelleistungsgradient in Abhängigkeit vom Ladezustand des Energiespeichers (22) gewählt wird, wobei insbesondere der zeitliche Verlauf des Betrags der Regelleistung eingestellt und die Toleranz des Betrags der bereitzustellenden Regelleistung über die Zeit genutzt wird.

11. Verfahren nach einem der vorangehenden Ansprüche, **dadurch gekennzeichnet, dass**
bei einer Änderung der Frequenzabweichung um weniger als einen Unempfindlichkeitsbereich, insbesondere um weniger als 10 mHz, eine veränderte Regelleistung nur erbracht wird, um den Ladezustand des Energiespeichers (22) einzustellen, insbesondere die veränderte Regelleistung nur dann erbracht wird, wenn sich der Ladezustand des Energiespeichers (22) dadurch möglichst stark zum mittleren Ladezustand hin oder möglichst wenig vom mittleren Ladezustand weg bewegt.

12. Vorrichtung zum Durchführen eines Verfahrens nach Anspruch 3, **dadurch gekennzeichnet, dass**
die Vorrichtung (21) zumindest einen Energiespeicher (22) und eine Steuerung (23) zum Steuern und/oder Regeln der Leistung des Energiespeichers (22) umfasst, wobei der Energiespeicher (22) derart an ein Stromnetz (24) angeschlossen ist, dass durch die Vorrichtung Energie in das Stromnetz (24) einspeisbar und aus dem Stromnetz (24) entnehmbar ist, dass
die Vorrichtung (21) zumindest einen Energieerzeuger und/oder zumindest einen Energieverbraucher umfasst, der oder die derart an das Stromnetz (24) angeschlossen ist oder sind, dass durch den Energieerzeuger Regelleistung in das Stromnetz (24) einspeisbar und/oder durch den Energieverbraucher aus dem Stromnetz (24) entnehmbar ist und der Energiespeicher (22) vorzugsweise durch den Energieerzeuger aufladbar und/oder durch den Energieverbraucher entladbar ist,
und dass
die Vorrichtung (21) eine Vorrichtung zum Messen des Ladezustands des zumindest einen Energiespeichers (22) und einen Datenspeicher umfasst, wobei in dem Datenspeicher der gewünschte mittlere Ladezustand des Energiespeichers (22) gespeichert ist, wobei die Steuerung (23) auf den Datenspeicher Zugriff hat und dazu ausgelegt ist, in Abhängigkeit von dem Ladezustand des Energiespeichers (22) die vom Energiespeicher (22) abgegebene und/oder aufgenommene Regelleistung zu steuern.

13. Vorrichtung nach Anspruch 12, **dadurch gekennzeichnet, dass**
der Energiespeicher (22) ein Akkumulator ist, vorzugsweise ein Lithium-Ionen-Akkumulator, ein Blei-Schwefelsäure-Akkumulator, ein Nickel-Cadmium-Akkumulator, ein Natriumsulfid-Akkumulator und/oder ein Li-Ionen-Akkumulator und/oder ein Verbund aus zumindest zwei dieser Akkumulatoren ist.

## Claims

1. Method for providing control power for an electricity network (24) in which at least one energy store (22) connected to the electricity network (24) supplies energy to the electricity network (24) as required and/or takes up energy from the electricity network (24) as required, **characterized in that**,
when there is a change of the required control power, the time after the change from which a changed control power is provided by the energy store (22) is chosen in dependence on the charging state at the given time of the energy store (22), **in that** the time lies in a time interval between the change of the required control power and a maximum time after the change, the time interval preferably depending on the type of control power requested, in particular the time interval being 30 seconds in the case of provision of primary control power, 5 minutes in the case of provision of secondary control power and 15 minutes in the case of provision of minutes reserve power, and **in that**, when there is a change of the required control power, positive control power is fed into the electricity network (24) at an early time, preferably immediately, and/or negative control power is removed from the electricity network (24) at a late time, preferably at the latest possible time, if the charging state of the energy store (22) lies above a first limit value and/or, when there is a change of the required control power, negative control power is removed from the electricity network (24) at an early time, preferably immediately, and/or positive control power is fed into the electricity network (24) at a late time, preferably at the latest possible time, if the charging state of the energy store (22) lies below a second limit value, the two limit values particularly preferably defining a desired medium charging state.

2. Method according to Claim 1, **characterized in that** a change of the required control power is established by a change of the frequency deviation of the network frequency of the electricity network (24) from the setpoint value of the network frequency of the electricity network (24) being measured, in particular a change of the frequency deviation by a minimum amount, preferably by 10 mHz, the amount of the control power preferably depending on the level of the frequency deviation, particularly preferably being chosen in certain regions in linear proportion to the level of the frequency deviation.

3. Method according to Claim 1 or 2, **characterized in that**
the frequency deviation is measured with a greater accuracy than is necessary for delivering the control power, preferably with an accuracy of at least ± 8 mHz, particularly preferably of at least ± 4 mHz, most particularly preferably of at least ± 2 mHz, especially preferably of at least ± 1 mHz.

4. Method according to one of the preceding claims, **characterized in that**
the charging state of the energy store (22) is adapted by choosing the time, in particular a desired medium energy content in the energy store (22) is aimed for, the desired medium energy content lying in the range between 20% and 80% of the maximum energy content in the energy store (22), preferably lying between 40% and 60%, particular preferably at 50% of the maximum energy content in the energy store (22).

5. Method according to one of the preceding claims, **characterized in that**
the energy store (22) is operated jointly with at least one energy generator and/or at least one energy consuming entity for the provision of control power for the electricity network (24).

6. Method according to Claim 5, **characterized in that** the energy store (22) is operated in its closed-loop control and/or open-loop control in dependence on and in operative connection with the at least one energy generator and/or with the at least one energy consuming entity in the provision of control power for an electricity network (24).

7. Method according to Claim 3, **characterized in that** a tolerance with respect to the frequency deviation from the setpoint value of the network frequency of the electricity network (24) is used in order to set the charging state of the energy store (22) at the same time as providing the control power by the energy store (22) .

8. Method according to one of the preceding claims, **characterized in that**
the tolerance with respect to the amount of the control power provided is used in order to set the charging state of the energy store (22) at the same time as providing the control power by the energy store (22), preferably the amount of the requested control power being exceeded, in particular by a maximum of 30% and/or by 10 MW, particularly preferably by a maximum of 20% and/or by 5 MW, to make use of the tolerance with respect to the amount of the control power provided, the percentage by which the amount of the requested control power is exceeded being chosen particularly preferably in proportion to the deviation of the charging state of the energy store (22) from a desired medium charging state.

9. Method according to either of Claims 7 and 8, **characterized in that**
the charging state of the energy store (22) is set by the energy store (22) feeding into the electricity network (24) a greater control power, lying within the tolerance or the tolerances, or taking up from the electricity network (24) a smaller control power, lying within the tolerance or the tolerances, in the case where the charging state of the energy store (22) lies above a first limit value, and/or the energy store (22) feeding into the electricity network (24) a smaller control power, lying within the tolerance or the tolerances, or taking up from the electricity network (24) a greater control power, lying within the tolerance or the tolerances, in the case where the charging state of the energy store (22) lies below a second limit value.

10. Method according to one of the preceding claims, **characterized in that**
a control power gradient is chosen in dependence on the charging state of the energy store (22), the variation over time of the amount of the control power being particularly set and the tolerance of the amount of the control power to be provided over time being used.

11. Method according to one of the preceding claims, **characterized in that**,
when there is a change of the frequency deviation by less than a range of insensitivity, in particular by less than 10 mHz, a changed control power is only delivered in order to set the charging state of the energy store (22), in particular the changed control power is only delivered if the charging state of the energy store (22) is thereby charged or discharged as strongly as possible towards the medium charging state or as little as possible away from the medium charging state.

12. Device for carrying out a method according to Claim 3, **characterized in that**
the device (21) comprises at least one energy store (22) and a control system (23) for controlling the power of the energy store (22) in an open-loop and/or closed-loop manner, the energy store (22) being connected to an electricity network (24) in such a way that energy can be fed into the electricity network (24) and can be removed from the electricity network (24) by the device,
**in that**
the device (21) comprises at least one energy generator and/or at least one energy consuming entity that is connected to the electricity network (24) in such a way that control power can be fed into the electricity network (24) by the energy generator and/or can be removed from the electricity network (24) by the energy consuming entity and the energy store (22) can preferably be charged by the energy generator and/or discharged by the energy consuming entity,
and **in that**
the device (21) comprises a device for measuring the charging state of the at least one energy store (22) and a data memory, the desired medium charging state of the energy store (22) being stored in the data memory, the control system (23) having access to the data memory and being designed for controlling the control power delivered and/or taken up by the energy store (22) in dependence on the charging state of the energy store (22).

13. Device according to Claim 12, **characterized in that**
the energy store (22) is a rechargeable battery, preferably a lithium-ion rechargeable battery, a lead-sulphuric acid rechargeable battery, a nickel-cadmium rechargeable battery, a sodium-sulphide rechargeable battery and/or a Li-ion rechargeable battery and/or a combination of at least two of these rechargeable batteries.

## Revendications

1. Procédé destiné à la fourniture d'une puissance de régulation pour un réseau électrique (24), dans lequel au moins un accumulateur d'énergie (22) connecté au réseau électrique (24) achemine de l'énergie au réseau électrique (24) selon les besoins et/ou prélève de l'énergie selon les besoins à partir du réseau électrique (24), **caractérisé en ce que**,
lors d'une modification de la puissance de régulation nécessaire, le moment qui suit la modification à partir duquel une puissance de régulation modifiée est fournie par l'accumulateur d'énergie (22) est choisi en fonction de l'état de charge actuel de l'accumulateur d'énergie (22),
**en ce que** le moment se situe dans un intervalle de temps entre la modification de la puissance de régulation nécessaire et une durée maximale après la modification, l'intervalle de temps dépendant de préférence du type de la puissance de régulation demandée, l'intervalle de temps étant en particulier égal à 30 secondes en cas de fourniture d'une puissance de régulation primaire, égal à 5 minutes en cas de fourniture d'une puissance de régulation secondaire et égal à 15 minutes en cas de fourniture d'une réserve-minutes,
et **en ce que**,
lors d'une modification de la puissance de régulation nécessaire, une puissance de régulation positive est injectée dans le réseau électrique (24) à un moment précoce, de préférence immédiatement, et/ou une puissance de régulation négative est prélevée à partir du réseau électrique (24) à un moment tardif, de préférence au moment le plus tardif possible, quand l'état de charge de l'accumulateur d'énergie (22) se situe au-dessus d'une première valeur limite et/ou, lors d'une modification de la puissance de régulation nécessaire, une puissance de régulation négative est prélevée à partir du réseau électrique (24) de façon précoce, de préférence immédiatement, et/ou une puissance de régulation positive est injectée dans le réseau électrique (24) à un moment tardif, de préférence au moment le plus tardif possible, quand l'état de charge de l'accumulateur d'énergie (22) se situe au-dessous d'une deuxième valeur limite, les deux valeurs limites définissant de façon particulièrement préférée un état de charge moyen souhaité.

2. Procédé selon la revendication 1, **caractérisé en ce**
**qu'**une modification de la puissance de régulation nécessaire est constatée par le fait qu'une modification de la différence de fréquence de la fréquence de réseau du réseau électrique (24) par rapport à la valeur de consigne de la fréquence de réseau du réseau électrique (24) est mesurée, en particulier une modification de la différence de fréquence égale à un montant minimal, de préférence égale à 10 mHz, le montant de la puissance de régulation dépendant de préférence de la hauteur de la différence de fréquence, ce montant étant de façon particulièrement préférée choisi par secteurs de façon linéairement proportionnelle à la hauteur de la différence de fréquence.

3. Procédé selon la revendication 1 ou 2, **caractérisé en ce que**
la différence de fréquence est mesurée avec une précision plus élevée que ce qui est nécessaire pour la production de la puissance de régulation, de préférence avec une précision d'au moins ±8 mHz, de façon particulièrement préférée d'au moins ±4 mHz, de façon tout à fait particulièrement préférée d'au moins ±2 mHz, de façon spécialement préférée d'au moins ±1 mHz.

4. Procédé selon l'une des revendications précédentes, **caractérisé en ce que**,
l'état de charge de l'accumulateur d'énergie (22) est adapté par le choix du moment, en particulier une teneur en énergie moyenne souhaitée est recherchée dans l'accumulateur d'énergie (22), la teneur en énergie moyenne souhaitée se situant dans la plage entre 20 % et 80% de la teneur en énergie maximale dans l'accumulateur d'énergie (22), de préférence entre 40 % et 60%, de façon particulièrement préférée étant égale à 50 % de la teneur en énergie maximale dans l'accumulateur d'énergie (22).

5. Procédé selon l'une des revendications précédentes, **caractérisé en ce que**
l'accumulateur d'énergie (22) est mis en oeuvre conjointement avec au moins un générateur d'énergie et/ou au moins un consommateur d'énergie pour la fourniture de puissance de régulation pour le réseau électrique (24).

6. Procédé selon la revendication 5, **caractérisé en ce que**,
dans sa régulation et/ou commande, l'accumulateur d'énergie (22) est mis en oeuvre en fonction de et en interaction avec l'au moins un générateur d'énergie et/ou l'au moins un consommateur d'énergie lors de la fourniture de puissance de régulation pour un réseau électrique (24).

7. Procédé selon la revendication 3, **caractérisé en ce**
**qu'**une tolérance concernant la différence de fréquence par rapport à la valeur de consigne de la fréquence de réseau du réseau électrique (24) est utilisée pour régler l'état de charge de l'accumulateur d'énergie (22) en même temps que la fourniture de la puissance de régulation par l'accumulateur d'énergie (22).

8. Procédé selon l'une des revendications précédentes, **caractérisé en ce que**
la tolérance concernant le montant de la puissance de régulation fournie est utilisée pour régler l'état de charge de l'accumulateur d'énergie (22) en même temps que la fourniture de la puissance de régulation par l'accumulateur d'énergie (22), le montant de la puissance de régulation exigée étant, pour l'utilisation de la tolérance concernant le montant de la puissance de régulation fournie, de préférence dépassé, en particulier de 30% maximum et/ou de 10 MW, de façon particulièrement préférée dépassé de 20 % maximum et/ou de 5 MW, le pourcentage de dépassement du montant de la puissance de régulation exigée étant de façon particulièrement préférée choisi proportionnellement à la différence de l'état de charge de l'accumulateur d'énergie (22) par rapport à un état de charge moyen souhaité.

9. Procédé selon l'une des revendications 7 ou 8, **caractérisé en ce que** l'état de charge de l'accumulateur d'énergie (22) est réglé par le fait que, au cas où l'état de charge de l'accumulateur d'énergie (22) se situe au-dessus d'une première valeur limite, l'accumulateur d'énergie (22) injecte dans le réseau électrique (24) une puissance de régulation plus grande située à l'intérieur de la tolérance ou des tolérances ou prélève à partir du réseau électrique (24) une puissance de régulation plus petite située à l'intérieur de la tolérance ou des tolérances et/ou, au cas où l'état de charge de l'accumulateur d'énergie (22) se situe au-dessous d'une deuxième valeur limite, l'accumulateur d'énergie (22) injecte dans le réseau électrique (24) une puissance de régulation plus petite située à l'intérieur de la tolérance ou des tolérances ou prélève à partir du réseau électrique (24) une puissance de régulation plus grande située à l'intérieur de la tolérance ou des tolérances.

10. Procédé selon l'une des revendications précédentes, **caractérisé en ce**
**qu'**un gradient de puissance de régulation est choisi en fonction de l'état de charge de l'accumulateur d'énergie (22), l'allure dans le temps du montant de la puissance de régulation étant en particulier réglé, et la tolérance du montant de la puissance de régulation à fournir étant utilisée au cours du temps.

11. Procédé selon l'une des revendications précédentes, **caractérisé en ce que**
lors d'une variation de l'écart de fréquence de moins d'une plage d'insensibilité, en particulier de moins de 10 mHz, une puissance de régulation modifiée n'est produite que pour régler l'état de charge de l'accumulateur d'énergie (22), en particulier la puissance de régulation modifiée n'est produite que quand l'état de charge de l'accumulateur d'énergie (22) se déplace de ce fait le plus fortement possible en direction de l'état de charge moyen ou le plus faiblement possible en s'éloignant de l'état de charge moyen.

12. Dispositif destiné à la réalisation d'un procédé selon la revendication 3, **caractérisé en ce que**
le dispositif (21) comprend au moins un accumulateur d'énergie (22) et une commande (23) pour la commande et/ou la régulation de la puissance de l'accumulateur d'énergie (22), l'accumulateur d'énergie (22) étant connecté à un réseau électrique (24) de telle sorte que le dispositif peut injecter de l'énergie dans le réseau électrique (24) ou prélever de l'énergie à partir du réseau électrique (24),
**en ce que**
le dispositif (21) comprend au moins un générateur d'énergie et/ou au moins un consommateur d'énergie qui est ou qui sont connecté (s) au réseau électrique (24) de telle sorte que de la puissance de régulation peut être injectée dans le réseau électrique (24) par le générateur d'énergie et/ou peut être prélevée à partir du réseau électrique (24) par le consommateur d'énergie, et l'accumulateur d'énergie (22) peut de préférence être chargé par le générateur d'énergie et/ou être déchargé par le consommateur d'énergie,
et **en ce que**
le dispositif (21) comprend un dispositif destiné à la mesure de l'état de charge de l'au moins un accumulateur d'énergie (22) et une mémoire de données, l'état de charge moyen souhaité de l'accumulateur d'énergie (22) étant enregistré dans la mémoire de données, la commande (23) ayant accès à la mémoire de données et étant conçue pour, en fonction de l'état de charge de l'accumulateur d'énergie (22), commander la puissance de régulation délivrée et/ou prélevée par l'accumulateur d'énergie (22).

13. Dispositif selon la revendication 12, **caractérisé en ce que**
l'accumulateur d'énergie (22) est un accumulateur, de préférence un accumulateur lithium-ion, un accumulateur plomb-acide sulfurique, un accumulateur nickel-cadmium, un accumulateur sulfure de sodium et/ou un accumulateur li-ion et/ou un composite d'au moins deux de ces accumulateurs.
